# EUROPÄISCHE PATENTANMELDUNG

(11) **EP 2 048 028 A1**
(43) Veröffentlichungstag der Anmeldung: **15.04.2009**
(21) Anmeldenummer: 08105166.6
(22) Anmeldetag: 28.08.2008
(51) Int. Cl.: B60P 7/15, B60P 7/08, B60R 7/02

(54) **Lösbares Befestigungssystem für Ladegut**

(30) Priorität: 11.10.2007 DE 102007048894
(71) Anmelder: Sortimo Speedwave GmbH, 86441 Zusmarshausen (DE)
(72) Erfinder: Sackers, Olaf, 86391 Stadtbergen (DE)
(74) Vertreter: Zipse Habersack Kritzenberger

(57) **Zusammenfassung**

Die Erfindung betrifft ein lösbares Befestigungssystem für Ladgut in einem Laderaum von beispielsweise einem Fahr- oder Flugzeug. Das System weist eine teleskopierbare Befestigungsstange (10) auf, an deren Enden jeweils ein verschwenkbares Arretiergelenk (16) vorgesehen ist, das zur Fixierung der Befestigungsstange (10) an einer Halteeinrichtung des Befestigungssystems festlegbar ist.

## Beschreibung

Die Erfindung betrifft ein lösbares Befestigungssystem für Ladegut in einem Transport- oder Laderaum von beispielsweise einem Fahr- oder Flugzeug, mit welchem System ein Fixieren von Stückgut erreicht werden soll.

Aus dem Stand der Technik ist gemäß der EP 1 182 082 A1 eine Spannstange bekannt, die entsprechend der vorliegenden Erfindung an deren Enden in einer Halteeinrichtung, beispielsweise in einer Airline-Schiene variabel positionierbar und arretierbar ist. In Entsprechung dieses Standes der Technik verfügt das vorliegende Befestigungssystem über einen Teleskop-Mechanismus, der in vorteilhafter Weise mittels einer Feder vorgespannt ist.

Oben genanntes System stellt zwar einen gewissen Positionierbereich der Spannstange zur Verfügung, wobei dieser jedoch auf eine rein horizontale oder vertikale Verschiebung der Spannstange begrenzt ist.

Aufgabe der vorliegenden Erfindung ist es damit, den Positionierbereich einer Befestigungsstange zur Sicherung von Ladegut zu erweitern. Eine weiterführende Aufgabe der Erfindung liegt darin, die Arretiermöglichkeiten für unterschiedliches Stückgut in spezieller Anpassung hierauf zu erweitern.

Gelöst wird diese Aufgabe durch ein Befestigungssystem gemäß Anspruch 1. Vorteilhafte Weiterbildungen des Befestigungssystems gehen aus den Unteransprüchen hervor.

Kerngedanke der Erfindung ist es, eine teleskopierbare Befestigungsstange an deren Enden mit jeweils einem verschwenkbaren Arretiergelenk vorzusehen, welche Arretiergelenke jeweils an einer Halteeinrichtung des Befestigungssystems festlegbar sind. Durch diese Maßnahme kann die Befestigungsstange über eine vertikale und horizontale Verschiebung hinaus im Laderaum auch abgewinkelt zu einer Wand, zur Decke oder zum Boden des Laderaums angeordnet werden. Als Halteeinrichtung für die Arretiergelenke eignet sich besonders vorteilhaft eine Airline-Schiene, die eine variable Festlegung einer Spannstange entsprechend dem Verlauf der Schiene an unterschiedlichen Positionen ermöglicht, wodurch sich die Stange sehr gut in ihrer Position und aufgrund ihrer Verschwenkmöglichkeiten über einen großen Winkelbereich von 180° an die individuellen Geometrien und Größen des Stückgutes und auch an die des Laderaumes anpassen lässt.

Für eine am Boden des Laderaums installierte Halteeinrichtungs-Schiene lässt sich die Befestigungstange beispielsweise mit ihren beiden Arretiergelenken in eben dieser einzelnen Schiene festlegen, sodass die Befestigungsstange über die Höhe der Arretiergelenke vom Boden abragt und damit ein Verschieben von im Laderaum stehendem Ladegut verhindert. Ist der Laderaum an mehreren, bzw. allen Wänden mit derartigen Halteeinrichtungs-Schienen versehen, so kann die Befestigungsstange durch Festlegung der Arretiergelenke an zwei unterschiedlichen Laderaum-Wänden festgelegt werden. Durch die Möglichkeit einer Verschwenkung der Befestigungs- oder Spannstange gegenüber der Halteeinrichtung, lässt sich die Befestigungsstange auch zwischen einer Seitenwand und dem Boden, bzw. der oberen Deckenwand und einer Seitenwand des Laderaums festlegen. Es ergeben sich hier unzählige Möglichkeiten einer Arretierung der Befestigungsstange.

Neben der Möglichkeit einer Unterteilung des Laderaums und dem damit einhergehenden Verhindern eines Verschiebens von im Laderaum eingebrachtem Stückgut, weist das erfindungsgemäße Befestigungssystem gemäß einer vorteilhaften Ausführungsform zusätzlich eine auf der Befestigungsstange verschiebbar gehaltene Befestigungsschelle auf. Die Befestigungsschelle kann beispielsweise einen Hacken oder einen Ring zum Verzurren des Ladegutes mittels einem Verzurrband aufweisen. Eine mögliche Befestigungsschelle geht aus der anmeldereigenen europäischen Patentanmeldung EP 1 162 112 A1 hervor, deren Gegenstand ein Anker zum Befestigen oder Verzurren einer Last an einer Trägerplatte ist, auf den hier als Ausführungsform einer Befestigungsschelle vollumfänglich Bezug genommen wird.

In vorteilhafter Weiterbildung einer derartigen Befestigungsschelle ist diese zweiteilig aus einer an der Befestigungsstange geführten Schellenbuchse und einem dazu komplementären Haltemittel, wie beispielsweise einem D-Ring, gebildet. Die Schellenbuchse lässt sich an der Befestigungsstange in eine gewünschte Position verschieben und dort arretieren. Ein Festlegen der Schellenbuchse an gewünschter Stelle auf der Befestigungsstange kann beispielsweise durch Kontern der Schellenbuchse mittels einer Schraube ausgeführt sein, die am Außenumfang der Befestigungsstange ansetzt und von Hand gegen diesen festgezogen werden kann, sodass sich die Schellenbuchse nicht mehr weiter verschieben lässt.

Zwischen der Schellenbuchse und dem Haltemittel fungiert gemäß einer vorteilhaften Ausführungsform ein Schnellverschluss, mit dem das Haltemittel an der Schellenbuchse abgenommen bzw. daran festgelegt werden kann. Dies kann ein Schnappmechanismus sein, wie er in der EP 1 262 112 A1 aufgezeigt ist, oder ein Drehmechanismus wie er in einem Ausführungsbeispiel gemäß Fig. 4 der vorliegenden Erfindung dargestellt ist.

Bei einer zweiteiligen Ausführungsform der Befestigungsschelle aus Schellenbuchse und komplementärem Haltemittel besteht die Möglichkeit, unterschiedliche Haltemittel an der Schellenbuchse festzulegen. So können hier beispielsweise Hacken, Ösen, Spanngurte, Spannstifte etc. genannt werden.

Gemäß einer weiteren vorteilhaften Ausführungsform kann das Haltemittel auch ein weiteres Modul umfassen, wie beispielsweise einen Fahrradständer, eine Verstaubox, ein ausziehbares Gurtband oder ein Gepäcknetz, welches Modul mit dem Haltemittel verbunden ist, so dass dieses Modul an der Schellenbuchse und damit an der Befestigungsstange arretierbar ist. Beim Vorsehen eines Schnellverschlusses lässt sich dieses Modul dann auch auf einfache und schnelle Weise mit einem Handgriff wieder von der Befestigungsstange lösen.

Besteht die Befestigungsstange aus einem Außen- und Innenholm, wobei der Innenholm in dem Außenholm zum teleskopierbaren Ein- und Ausziehen in dem Außenholm gehalten ist, weist die Befestigungsstange gemäß einer weiteren vorteilhaften Ausführungsform ein Distanzstück auf, das auf den Innenholm aufgeschoben wird, und mit dem der Außendurchmesser des Innenholms über die Länge des Distanzstückes auf den Außendurchmesser des Außenholmes angepasst ist. Dies schafft die Möglichkeit, eine einzige Ausführungsform von Befestigungsschelle zu verwenden, die auf den Außendurchmesser des Außenholmes angepasst ist. Während demnach die Befestigungsschelle auf dem Außenholm ohne Hilfsmittel verschiebbar und arretierbar ist, sitzt diese Befestigungsschelle bei einer Positionierung am Innenholm auf dem darauf aufgesetzten Distanzstück. Damit die Rändelschraube zum Arretieren der Befestigungsschelle bis auf den Außendurchmesser des Innenholmes durchgreifen kann, weist das Distanzstück hierzu eine Vertiefung auf, darauf die Rändelschraube drückt.

Die Erfindung wird nun anhand der beigefügten Zeichnungen im Detail näher erläutert.
- Fig. 1 zeigt die erfindungsgemäße Befestigungsstange in perspektivischer Ansicht;
- Fig. 2 zeigt die erfindungsgemäße Befestigungsstange aus Fig. 1 in technischer Ansicht;
- Fig. 3 veranschaulicht das Detail eines Endes der erfindungsgemäßen Befestigungsstange;
- Fig. 4 zeigt eine besondere Ausführungsform des Befestigungsbolzens mit Verankerungsplatte.

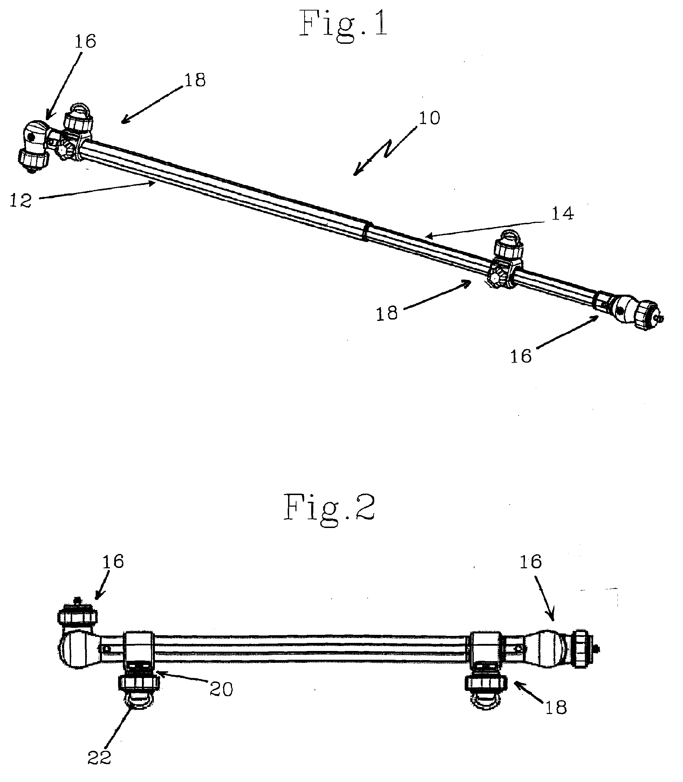

In Fig. 1 ist die erfindungsgemäße Befestigungsstange mit der Bezugsziffer 10 gekennzeichnet. Diese weist einen Außenholm 12 und einen darin verschiebbar gehaltenen Innenholm 14 auf, die zueinander in vorteilhafter Weise mit einer Feder vorgespannt sind. An beiden Enden der Befestigungsstange befindet sich ein Arretiergelenk 16, dessen ein Ende gegenüber dem anderen an der Befestigungsstange fixierten Ende über einen Winkelbereich von mindestens 180° verschwenkbar ist. Das Arretiergelenk kann an seinem offenen Ende an einer Halteeinrichtung (nicht gezeigt) des Befestigungssystems festgelegt werden. Dies kann beispielsweise eine sog. Airline-Schiene sein.

Auf der Befestigungsstange 10 sitzen zwei Befestigungsschellen 18, die jeweils auf dem Außen- bzw. Innenholm verschiebbar sind. Die Befestigungsschellen 18 lassen sich mittels einer Rändelschraube von Hand an einer gewünschten Position auf der Befestigungsstange arretieren, welche Rändelschraube die Befestigungsschelle mittels Verdrehen an dem entsprechenden Holm der Befestigungsstange kontert. Die in Fig. 1 gezeigte Befestigungsschelle 18 weist einen Schlitz auf, an dem mittels eines Gurtes Ladegut festgelegt werden kann.

Fig. 2 zeigt die Befestigungsstange aus Fig. 1 in technischer Draufsicht. Das linksseitige Arretiergelenk 16 ist in einem Winkel von 90° zur Befestigungsstange abgewinkelt. In dieser in Fig. 2 gezeigten Position der Arretiergelenke ließe sich die Befestigungsstange beispielsweise an der Decke, bzw. der rechtsseitigen Seitenwand des Laderaums (nicht gezeigt) festlegen - insofern hier jeweils eine Halteeinrichtung vorgesehen ist.

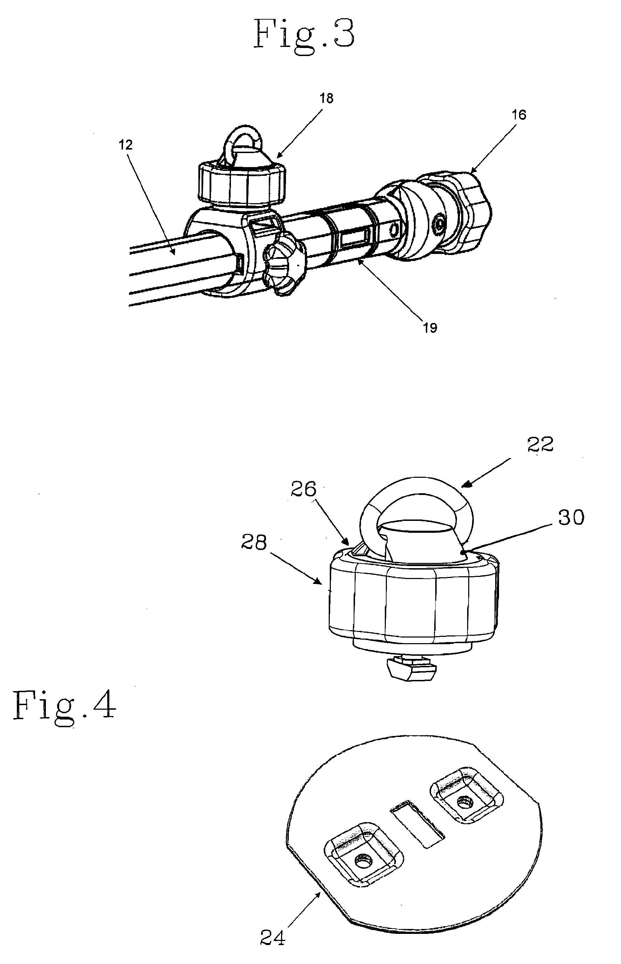

Fig. 3 zeigt das eine Ende der Befestigungsstange in größerem Detail. Gezeigt ist hier das Ende des Aussenholms 14 mit Arretiergelenk 16. Auf dem Innenholm ist ein Distanzstück 19 aufgesetzt, mit dem der Außendurchmesser des Innenholms an den Außendurchmesser des Außenholms angepasst ist. Aufgrund dieser Maßnahme lässt sich eine mit Befestigungsbolzen 18, deren Innendurchmesser, bzw. lichte Weite auf den Außendurchmesser des Außenholmes angepasst ist, ebenso am Innenholm auf dem Distanzstück 19 festlegen.

Fig. 4 zeigt die Verankerung 24, in die das komplementäre Gegenstück, der Befestigungsbolzen 18 arretiert werden kann, indem der am Befestigungsbolzen 18 abragende Anker durch die Öffnung der Verankerung 24 hindurch gesteckt und dann mittels Verdrehen des mit dem Anker verbundenen Innenbolzen 30 arretiert wird. Der Befestigungsbolzen verfügt ferner über eine Gummimanschette 28 an dem der Befestigungsbolzen ergriffen und auch verdreht werden kann, um ihn an der Befestigungsschelle 20 oder der Verankerung festzulegen. Die hier gezeigte Ausführungsform des Befestigungsbolzens weist ferner einen Drehkörper 26 auf, um den D-Haltering nach einem Festlegen des Befestigungsbolzens an der Befestigungsschelle 20 geeignet verdrehen zu können, ohne den Befestigungsbolzen von der Befestigungsschelle zu lösen. Durch Verdrehen des D-Halterings kann beispielsweise ein Verzurrgurt optimal durchgeführt und festgezurrt werden.

### Bezugszeichenliste:

- 10: Befestigungsstange
- 12: Außenholm
- 14: Innenholm
- 16: Arretiergelenk
- 18: Befestigungsbolzen
- 19: Distanzstück
- 20: Befestigungsschelle
- 22: D-Ring
- 24: Verankerung
- 26: Drehkörper
- 28: Gummimanschette
- 30: Innenbolzen

## Patentansprüche

1. Lösbares Befestigungssystem für Ladgut in einem Laderaum von beispielsweise einem Fahr- oder Flugzeug, aufweisend eine teleskopierbare Befestigungsstange (10), an deren Enden jeweils ein verschwenkbares Arretiergelenk (16) vorgesehen ist, das zur Fixierung der Befestigungsstange (10) an einer Halteeinrichtung des Befestigungssystems festlegbar ist.

2. Befestigungssystem nach Anspruch 1,
**dadurch gekennzeichnet, dass** die Befestigungsstange (10) mindestens eine auf der Befestigungsstange verschiebbar gehaltene Befestigungsschelle (20) aufweist.

3. Befestigungssystem nach Anspruch 2,
**dadurch gekennzeichnet, dass** eine zweiteilige Befestigungseinheit aus der an der Befestigungsstange geführten Befestigungsschelle (20) und einem dazu komplementären Befestigungsbolzen (18) ausgebildet ist, wobei ein Schnellverschluss zum Arretieren des Befestigungsbolzens an der Befestigungsschelle vorgesehen ist.

4. Befestigungssystem nach Anspruch 3,
**dadurch gekennzeichnet, dass** der Befestigungsbolzen (18) ein Modul, wie beispielsweise einen Fahrradständer, eine Verstaubox, ein ausziehbares Gurtband, ein Gepäcknetz oder dergleichen, umfasst.

5. Befestigungssystem nach einem der vorangehenden Ansprüche,
**dadurch gekennzeichnet, dass** die Halteeinrichtung eine Schiene ist, in der das Arretiergelenk verfahrbar und an gewünschter Stelle festlegbar ist.

6. Befestigungssystem nach einem der vorangehenden Ansprüche,
**dadurch gekennzeichnet, dass** die teleskopierbare Befestigungsstange (10) einen Innenholm (14) und ein darauf aufschiebbaren Außenholm (12) umfasst, wobei auf dem Innenholm ein Distanzstück (19) vorgesehen ist, mit dem der Außendurchmesser des Innenholms (14) über die Länge des Distanzstückes auf den Außendurchmesser des Außenholmes (12) angepasst ist.
